# EUROPÄISCHE PATENTANMELDUNG

(11) **EP 2 405 124 A1**
(43) Veröffentlichungstag der Anmeldung: **11.01.2012**
(21) Anmeldenummer: 11005388.1
(22) Anmeldetag: 01.07.2011
(51) Int. Cl.: F02M 25/07, G01D 5/14

(54) **Abgasrückführsystem einer Brennkraftmaschine mit einem Agbasrückführventil**

(30) Priorität: 02.07.2010 DE 102010025946
(71) Anmelder: Hirschmann Automotive GmbH, 6830 Rankweil (AT)
(72) Erfinder: Lorenz, Thomas, 6800 Feldkirch Nofels (AT); Nachbaur, Alexander, 6833 Fraxern (AT); Rutili, Boris, 8600 Dübendorf (CH)
(74) Vertreter: Greif, Thomas

(57) **Zusammenfassung**

Abgasrückführsystem einer Brennkraftmaschine mit einem Abgasrückführventil, das ein Gehäuse mit einem Einlass für die Zufuhr von Abgas der Brennkraftmaschine und mit zumindest einem Auslass für die Rückführung eines Teiles des Abgases in die Verbrennungsluftzufuhr der Brennkraftmaschlne aufweist, wobei eine Verbindung zwischen dem Einlass und dem zumindest einen Auslass von einem Ventilkörper freigegeben oder unterbrochen werden kann und ein Stellsystem mit Stellantrieb und Ventilkörper vorgesehen ist, wobei der Stellantrieb den Ventilkörper bewegt, um die Verbindung zwischen dem Einlass und dem zumindest einen Auslass freizugeben oder zu unterbrechen, wobei dem Ventilkörper ein magnetisches Messsystem zugeordnet ist, welches ein Sensorelement aufweist, um berührungslos die Position eines im Stellsystem befindlichen Magneten (5) linear zu erfassen, wozu der Magnet (5) an einer Stellstange (1) des Abgesrückführsystames angeordnet und dem Magneten (5) ein magnetisches Sensorelement zugeordnet ist, dadurch gekennzelchnet, dass ein Geberelement (4) von dem Magneten (5) und einer den Magneten (5) umgebenden Umspritzung (6) aus Kunststoff gebildet ist und das Geberelement (4) über die Umspritzung (6) an der Stellstange (1) befestigt ist.

## Beschreibung

Die Erfindung betrifft ein Abgasrückführsystem einer Brennkraftmaschine mit einem Abgasrückführventil, das ein Gehäuse mit einem Einlass für die Zufuhr von Abgas der Brennkraftmaschine und mit zumindest einem Auslass für die Rückführung eines Teiles des Abgases In die Verbrennungsluftzufuhr der Brennkraftmaschlne aufweist, wobei eine Verbindung zwischen dem Einlass und dem zumindest einen Auslass von einem Ventilkörper freigegeben oder unterbrochen werden kann und ein Stellsystem mit Stellantrieb und Ventilkörper vorgesehen ist, wobei der Stellantrieb den Ventilkörper bewegt, um die Verbindung zwischen dem Einlass und dem zumindest einen Auslass freizugeben oder zu unterbrechen, wobei dem Ventilkörper ein magnetisches Messsystem zugeordnet ist, welches ein Sensorelement aufweist, um berührungslos die Position eines im Stellsystem befindlichen Magneten linear zu erfassen, wozu der Magnet an einer Stellstange des Abgasrückführsystemes angeordnet und dem Magneten ein magnetisches Sensorelement zugeordnet ist, gemäß den Merkmalen des Oberbegriffes des Patentanspruches 1.

Der vorliegenden Erfindung liegt die Aufgabe zu Grunde, ein verschleißfrei arbeitendes Positionserfassungssystem, mit dem das Stellglied des Abgaaruckführventiles In Bezug auf seine Position erfasst werden kann, gegenüber dem Sensorsystem, welches in der EP 2 159 405 A2 beschrieben ist, zu verbessern.

Diese Aufgabe ist durch die Merkmale des Patentanspruches 1 gelöst.

Erfindungsgemäß ist vorgesehen, dass ein Geberelement von dem Magneten und einer den Magneten umgebenden Umspritzung aus Kunststoff gebildet ist und das Geberelement über die Umspritzung an der Stellstange befestigt ist. Dadurch wird es auf einfache Art und Weise ermöglicht, den Magneten an der Stellstange zu befestigen, in dem zum Beispiel der Magnet und das eine freie Ende der Stellstange in eine Spritzgussvorrichtung eingelegt wird und mit dem Geberelement aus Kunststoff umspritzt wird. Damit ist dauerhaft und zuverlässig der Magnet an der Stellstange angeordnet und lagefixiert befestigt und vor äußeren Einflüssen geschützt. Dies ist dann erreichbar, wenn der gesamte Magnet von dem Kunststoff umgeben wird. Hlerzu wird ein Kunststoffmaterial gewählt, das den Temperatur- und Bruchverhsltnissen und sonstigen Beanspruchungen im Einbauraum innerhalb eines Gehäuses des Abgasrückführventiles angepasst ist bzw. diesen widersteht.

In Weiterbildung der Erfindung weist das Geberelement an seinem einen Ende eine Ausnehmung auf, wobei ein Ende der Stellstange in der Ausnehmung unbewegbar festgelegt Ist. Bei dieser Variante wird das Geberelement zusammen mit dem Magneten hergestellt und gleichzeitig mit der Ausnehmung versehen. Die Geometrie dieser Ausnehmung ist so ausgelegt, dass das Ende der Stellstange dort in die Ausnehmung hineinpasst. Weiter kann zusätzlich vorgesehen werden, dass durch einen zusätzlichen Verfahrensschritt das Geberelement an der Stellstange befestigt wird. Dies kann beispielsweise durch Verkleben, Verstemmen, Verklemmen, Verschwei-βen oder dergleichen erfolgen. Da die Stellstange im Regelfall aus einem metallischen Werkstoff, zum Beispiel Stahl, besteht und das Geberelement aus Kunststoff gebildet ist, bietet sich in besonders vorteilhafter Weise ein Klebeprozess an. Dieser Klebeprozess kann unterstützt werden dadurch, dass die Ausnehmung von ihrer Geometrie her geringfügig kleiner, insbesondere durchmesserkleiner, gewählt Ist, als die Geometrie des Endes der Stellstange, insbesondere deren Außendurchmesser, so dass zusätzlich zu dem Klebeaffekt auch ein Klemmeffekt zur dauerhaften Lageflxierung des Geberelementes an der Stellstange beiträgt.

In Weiterbildung der Erfindung ist das Geberelement zylinderförmig ausgebildet und weist einen radial umlaufenden Absatz auf. Durch die zylinderförrnige Ausbildung (äußere Kontur) des Geberelementes ist es möglich, dass die Stellstange zusätzlich durch dieses Geberelement während ihrer Bewegung In dem Gehäuse des Abgasrückführventiles geführt wird. Insbesondere wenn der Teil des Gehäuses, in dem das Geberelement axial bewegt wird, auch aus Kunststoff besteht und dieser Kunststoff auf den Kunststoff des Geberelementes abgestimmt ist, lässt sich eine geringe Reibung und ein geringer Verschleiß über die Lebensdauer des gesamten Abgasrückführventiles in vortellhafter Weise erzielen. Der radial umlaufende Absatz, sofern er bei der zylinderförmigen Gestaltung des Geberelementes vorhanden ist, kann nur oder ergänzend zu dem übrigen zylinderförmigen Geberelement der Führung dieses Geberelementes in dem Gehäuse des Abgasrückführventiles dienen. Darüber hinaus hat er die Funktion, dass damit eine Wegbegrenzung des Geberelementes (und damit einhergehend des Magneten und auch des Ventiles) in eine Richtung realisierbar ist. Damit wird durch diesen radial umlaufenden Absatz ein Anschlag In einer Bewegungsrichtung (Endanschlag) realisiert.

In Weiterbildung der Erfindung ist in oder an dem Geberelement eine Feder, die sich an dem Gehäuse des Abgasrückführventiles abstützt, angeordnet. Damit ist zusätzlich oder alternativ zu der schon bekannten Rückstellfeder des Abgasrückführventiles eine zusätzliche Feder vorhanden, wobei die schon bekannte und vorhandene Rückstellfeder entfallen kann, wenn an oder in dem Geberelement die erfindungsgemäßa Feder vorgesehen ist.

In Welterbildung der Erfindung ist die Feder In der Umspritzung festgelegt. Hier bieten sich zwei Alternativen an. Zum einen ist in Weiterbildung der Erfindung vorgesehen, dass von dem Geberelement gleichzeitig mit dessen Herstellung die Feder in das Spritzgusswerkzeug eingelegt und mit Kunststoff umgossen wird. Damit steht nach Herstellung des Geberelementes an dessen einem Ende die Feder zur Verfügung, die ergänzend oder alternativ zu der bekannten Rückstellfeder des Abgasrückführventiles ihre Funktion ausüben kann.

Alternativ dazu ist es In einer weiteren Ausgestaltung der Erfindung vorgesehen, dass das dem Ende der Stellstange abgewandte Ende des Geberelementes topfförmlg ausgebildet ist und dort die Feder eingesetzt ist. Das bedeutet, dass mit Herstellung des Geberelementes eine Aufnahme für die Feder vorgesehen wird, die dort in die vorgesehene Aufnahme nach der Herstellung des Geberelementes eingesetzt und befestigt wird. Auch hier kommt insbesondere ein Klebeprozess oder ein Klemmvorgang in Betracht, um die Feder in die topfförmige Ausgestaltung des Geberelementes einzusetzen und in ihrer Lage zu fixieren.

Weiterhin kann erfindungsgemäß vorgesehen werden, dass, wie schon vorstehend erläutert, der Magnet und das Geberelement in ein Kunststotfspritzgusswerkzeug eingelegt und mit einem geeigneten Kunststoffmaterial umspritzt werden. Daneben Ist es selbstverständlich auch denkbar, dass nicht ein separater Permanentmagnet verwendet wird, sondern dass das Geberelement aus einem magnetischen oder magnetisierbaren Kunststoffmaterial gebildet ist. Hier Ist beispielsweise daran zu denken, dass einem elektrisch nicht leitfähigen und einem nicht magnetischen Kunststoffmaterial magnetische oder magnetisierbare Partikel beigemischt sind. So kann das derart hergestellte Geberelement nach seiner Herstellung schon die erforderlichen magnetischen Eigenschaften aufweisen oder durch einen geeigneten Magnetisiervorgang magnetisiert werden.

Bezüglich der Herstellung des Abgasrückführventiles bezüglich des Geberelementes mit dem Magneten wird noch einmal darauf hingewiesen, dass das Ende der Stellstange mit dem Geberelement versehen wird. Hierbei kann das Geberelement vor seiner Befestigung an dem freien Ende der Stellstange hergestellt werden. Bei dieser Herstellung kann ein Permanentmagnet mit einem Kunststoffmaterial (nicht magnetisch) umspritzt werden. Alternativ kann ein Kunststoffmaterial verwendet werden, welches magnetische Eigenschaften aufweist oder nach seiner Herstellung magnetisiert wird. Bei den bisher beschriebenen Varianten ist also das Geberelement ein separates Bauteil und wird in geeigneter Weise nach seiner Herstellung (und ggf. Magnetisierung) an dem freien Ende der Stellstange befestigt.

Alternativ dazu kann das Geberelement schon mit seiner Herstellung mit der Stellstange verbunden werden. Auch hier gilt, dass die Stellstange zusammen mit dem Permanentmagnet in ein Kunststoffspritzgusswerkzeug eingelegt und Kunststoffmaterial (nicht magnetisch) eingeführt wird. Anschließend steht die Stellstange mit dem fertigen Geberelement zur Verfügung. Alternativ dazu kann anstelle des Permanentmagneten ein Kunststoffmaterial mit magnetischen oder magnetisierbaren Eigenschaften eingesetzt werden.

Bezüglich der Anordnung des Geberelementes an oder um die Stellstange herum wird noch darauf hingewiesen, dass sich die Anordnung des Geberelementes nach dem geometrischen Einbauraum innerhalb des Gehäuses des Abgasrückführventiles richtet Das bedeutet, dass das Geberelement in vorteilhafter Weise an dem freien Ende der Stellstange angeordnet und befestigt wird. Dabei sind andere Anordnungsmögllchkelten des Geberelementes an oder um die Stellstange herum nicht ausgeschlossen. So kann das Geberelement auch im axialen Verlauf und von dem freien Ende der Stellstange abgewandt angeordnet und befestigt werden.

Die Verbesserung der vorliegenden Erfindung basiert darauf, dass das Stellelement des Abgasrückführventiles, insbesondere eine Stellstange, mit einem Magneten verbunden wird, wobei der Magnet mit einem Hallsensor zusammenarbeitet. Im Detail geht es darum, wie der Magnet, der zusammen mit der Stellstange bewegt wird, an dieser angeordnet und befestigt wird.

Das Stellelement, insbesondere die Stellstange (auch Kolben genannt) besteht auf Grund der Betriebsbedingungen (insbesondere sehr hohe Temperaturen) aus einem Stahlwerkstoff. Um den Magneten vor diesen Umgebungsbedinungen zu schützen und dennoch dauerhaft und sicher an den Stellelement befestigen zu können, ist es In erfindungsgemäßer Welse vorgesehen, dass der Magnet von einem Kunststoffmaterial zumindest teilweise, vorzugsweise vollständig umspritzt ist und an dem Stellelement befestigt wird. Dabei ist es denkbar, dass dieses Gebilde, bestehend aus Magnet und umspritzten Kunststoff, direkt oder indirekt, z. B. durch Zwischenanordnung von einer Hülse, an dem Stellelement befestigt wird. Mit Bewegung des Steilelementes, Im Regelfall gegen eine Federkraft, die von einer Spiralfeder erzeugt wird, wird auch der Magnet bewegt, so dass durch die Bewegung des Magnetes, insbesondere eine linear Bewegung, die Bewegung des Stellelementes mittels eines Hallsensors, der relativ dazu ortsfest befestigt ist, erfasst werden kann. Hierbei ist es ergänzend denkbar, dass der Hallsensor als Chip ausgebildet ist und auf einer Leiterplatte angeordnet ist, wobei der Chip, die Leiterplatte und gegebenenfalls weitere Bauelemente zur Auswertung der Signale des Chips ebenfalls mit einem Kunststoff zum Schutz der äußeren Umgebungebedirigurigen umspritzt sind.

Das erfindungsgemäße verschleißfrei arbeitende Sensorsystem kann bei Abgasrückführventilen (Druckdosen) eingesetzt werden, die beispielsweise mit Druckluft, hydraulisch oder elektrisch (Kern innerhalb einer von Strom durchflossenen Spule) bewegt wird.

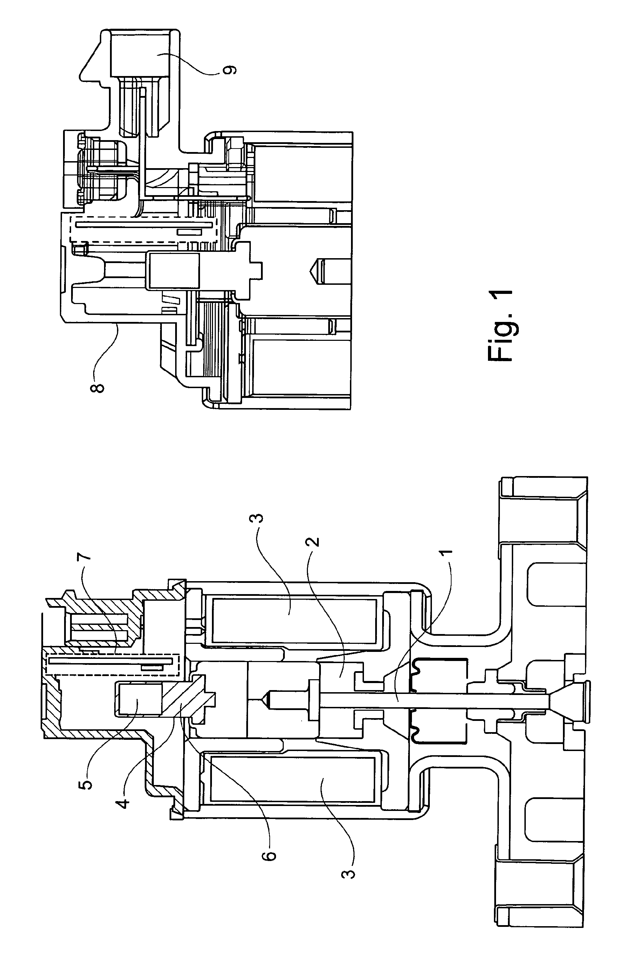

Weitere Details und vorteilhafte Ausgestaltungen werden im Zusammenhang mit den nachfolgenden Figuren 1 bis 3 beschrieben:
Figur 1 (linke Darstellung) zeigt schematisch den Aufbau eines Abgaarückführvontilos, mit einem als Stellstange 1 ausgebildeten Stellelement, wo. bei auf der Stellstange 1 ein Kern 2 angeordnet ist und dieser Kern 2 innerhalb von Spulen 3, die Strom durchflossen sind, längst bewegbar angeordnet ist. Diese Längsbewegung erfolgt in Abhängigkeit des Stromflusses durch Spulen 3, der von Betnebsparametem der Brenrikraftmaschlme, die von einer elektronischen Steuereinheit erfasst und gesteuert werden, erfolgt. Diese Bewegung erfolgt im Regelfall gegen die Kraft einer Feder, so dass im Stromlosen Fall die Federkraft überwiegt und die Stellstange 1 in ihre Ausgangsposition (Abgaarückführvontil geschlossen) bewegt. Ein im Bereich des oberen Endes der Stellstange 1 direkt oder indirekt angeordnetes Geberelement 4 umfasst einen Magneten 5 und Umspritzung 6 aus Kunststoff, wobei es auch denkbar ist, dass das Geberelement 4 aus einem magnetischen oder magnetisierbaren Kunststoff einteilig gespritzt ist. Dieses Geberelement ist direkt an dem oberen Ende der Stellstange 1 oder indirekt (im Falle der Figur 1 über ein zylinderförmiges Zwischenalemerit, dass der Führung der Stellestange 1 zwischen den Spulen 3 dient) angeordnet und befestigt. Das Geberelement 4 wirkt zusammen mit einem Sensorelement 7, wobei die vorstehend beschriebenen Elemente innerhalb eines Gehäuses 8 mit zumindest einer Steckverbindung 9 (siehe rechte Darstellung der Figur 1) angeordnet ist.

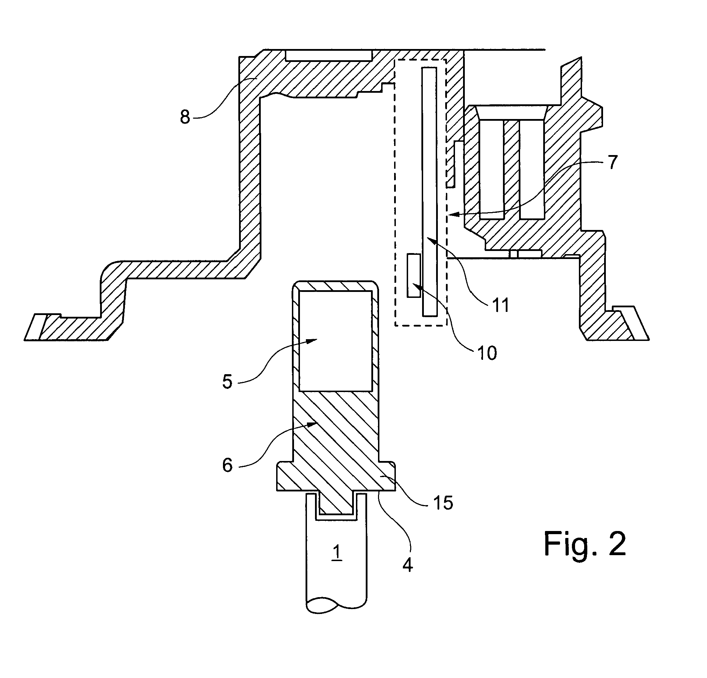

Die Ausgestaltung, wie sie in Figur 1 dargestellt ist, ist in Figur 2 noch einmal detaillierter dargestellt. Hier ist wieder erkennbar, dass das Geberelement 4 In diesem Fall direkt an der Stellstange 1 (oder alternativ dazu indirekt über zumindest ein Zwischenelement) angeordnet und befestigt ist. Ein Hallsensor (Hallchip) 10 ist auf einer Leiterplatte 11 (PCB) angeordnet, wobei auf der Leiterplatte 11 auch weitere Bauteile zur Beeinflussung des Ausgangssignaies des Hallsensors 10 (verstärken, verändern, auswerten des Signals) angeordnet sind. Diese Anordnung aus Leiterplatte 11 mit den drauf angeordneten Bauelementen einschließlich des Hallsensors 10 ist wieder von einer Kunststoffschicht vor äußeren Einflüssen geschützt. Dabei ist das gesamte Sensorgebilde 7 in geeigneter Form in oder an dem Gehäuse 8 angeordnet, wobei es auch denkbar ist, die schützende Kunststoffumspritzung für den Hallsensor 10 mit seiner Leiterplatte 11 und das Gehäuse 8 einstückig herzustellen. Weiterhin Ist erkennbar, dass von dem Geberelement 4 eine Führung 14 gebildet ist

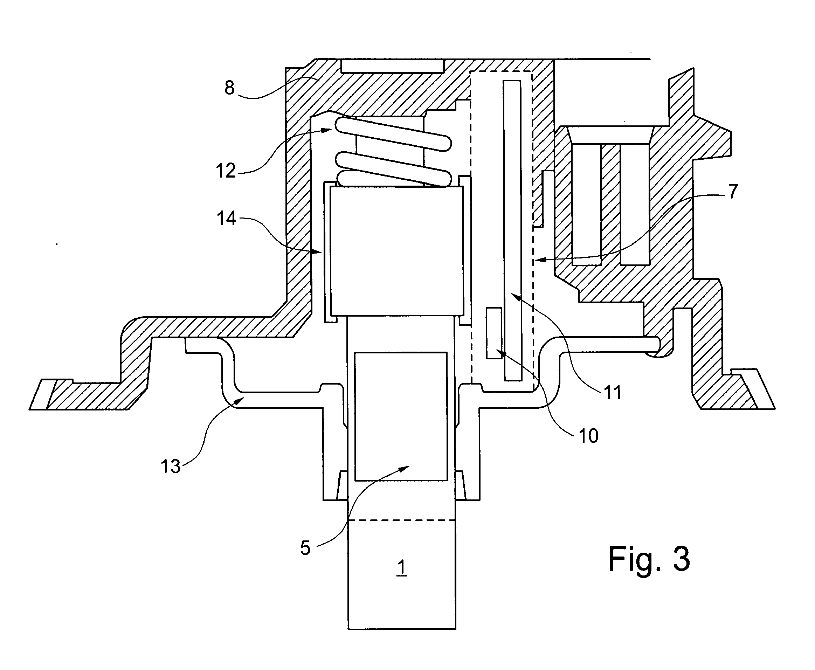

Figur 3 zeigt eine alternative Ausgestaltung, wobei das Geberelement 4 wiederum aus dem Magneten 5 und der Umspritzung 6 besteht und wieder direkt oder indirekt an dem Stellelement 1 angeordnet und befestigt ist. In diesem Fall ist eine Feder 12 mit einer Rückstellfunktlon für das Stellelement im stromlosen Fall ebenfalls im Bereich des Gehäuses 8, also im Endbereich des Stellelementes, angeordnet. Dabei bildet das bei Betrachtung der Figur 3 obere Ende des Geberelementes 4 eine Aufnahme und Führung für die Rückstellfeder 12. Innerhalb des Gehäuses 8 ist ein weiterer Gehäusebestandtell 13 vorhanden, der zur Führung des Stellelementes und/oder des Geberelementes 4 ausgebildet ist. Das Gehäuse 8 und das zusätzliche Gehäuseteil 13 können voneinander separate Bauteile sein oder sind einstückig ausgebildet. Außerdem ist von dem Geberelement 4 noch eine Führung 14 gebildet, die Tropfförmig ausgestaltet ist und innerhalb dessen die Rückstellfeder 12 gelagert und bewegbar untergebracht ist. Das Gehäuse 8 bzw. das Gehäuse 8 mit seinem zusätzlichen Gehäusetell 13 ist hinsichtlich seiner Konturen und geometrischen Abmessungen In Richtung des Abgagsrückführvontlles so ausgebildet, dass es einfach und schnell, jedoch dauerhaft an den zugehörigen Gegenkonturen festgesetzt werden kann.

## Patentansprüche

1. Abgasrückführsystem einer Brennkraftmaschine mit einem Abgasrückführventil, das ein Gehäuse mit einem Einlass für die Zufuhr von Abgas der Brennkraftmaschine und mit zumindest einem Auslass für die Rückführung eines Telles des Abgases In die Verbrennungsluftzufuhr der Brennkraftmaschine aufweist, wobei eine Verbindung zwischen dem Einlass und dem zumindest einen Auslass von einem Ventilkörper freigegeben oder unterbrochen werden kann und ein Stellsystem mit Stellantrieb und Ventilkörper vorgesehen ist, wobei der Stellantrieb den Ventilkörper bewegt, um die Verbindung zwischen dem Einlass und dem zumindest einen Auslass freizugeben oder zu unterbrechen, wobei dem Ventilkörper ein magnetisches Messsystem zugeordnet ist, welches ein Sensorelement aufweist, um berührungslos die Position eines im Stellsystem befindlichen Magneten (5) linear zu erfassen, wozu der Magnet (5) an einer Stellstange (1) des Abgasrückführsystemes angeordnet und dem Magneten (5) ein magnetisches Sensorelement zugeordnet ist, **dadurch gekennzeichnet, dass** ein Geberelement (4) von dem Magneten (5) und einer den Magneten (5) umgebenden Umspritzung (6) aus Kunststoff gebildet Ist und das Geberelement (4) über die Umspritzung (6) an der Stellstange (1) befestigt ist.

2. Abgasrüekfuhrsystem nach Anspruch 1, **dadurch gekennzeichnet, dass** das Geberelement (4) an seinem einen Ende eine Ausnehmung aufweist, wobei ein Ende der Stellstange (3) in der Ausnehmung unbewegbar festgelegt ist.

3. Abgasrückführventil nach Anspruch 1 oder 2, **dadurch gekennzeichnet, dass** das Geberelement (4) zylinderförmig ausgebildet ist und/oder einen radial umlaufenden Absatz (15) aufweist

4. Abgesrückführventil nach einem der vorhergehenden Ansprüche, **dadurch gekennzeichnet, dass** in oder an dem Geberelement (4) eine Feder (12), die sich an dem Gehäuse (8) des Abgaarückführventiles abstützt, angeordnet ist.

5. Abgasrückführventil nach Anspruch 4, **dadurch gekennzeichnet dass** die Feder (12) in der Umspritzung (6) festgelegt ist.

6. Abgasrückführventil nach einem der vorhergehenden Ansprüche, **dadurch gekennzeichnet, dass** von dem Geberelement (4) eine Führung (14) gebildet lst.

7. Abgasrückführventil nach Anspruch 4 und/oder 6. **dadurch gekennzeichnet dass** das dem Ende der Stellstange (1) abgewandte Ende des Geberelementes (4) topfförmig ausgebildet Ist und dort die Feder (12) eingesetzt Ist.
